# EUROPÄISCHE PATENTSCHRIFT

(11) **EP 0 691 728 B1**
(45) Veröffentlichungstag und Bekanntmachung des Hinweises auf die Patenterteilung: **22.04.1998**
(21) Anmeldenummer: 95810426.7
(22) Anmeldetag: 23.06.1995
(51) Int. Cl.: H02K 3/50

(54) **Vorrichtung zur Halterung der Stabenden einer Statorwicklung in einer dynamoelektrischen Maschine**
Means for supporting stator end windings of a dynamo-electric machine
Dispositif de support pour les têtes de bobines statoriques d'une machine dynamo-électrique

(30) Priorität: 09.07.1994 DE 4424215
(43) Veröffentlichungstag der Anmeldung: 10.01.1996
(73) Patentinhaber: ASEA BROWN BOVERI AG, 5400 Baden (CH)
(72) Erfinder: Neidhöfer, Gerhard, Prof.Dr., CH-5212 Hausen b. Brugg (CH); Zerlik, Willibald, CH-5242 Birr (CH)

(56) Entgegenhaltungen:
- EP-A- 0 309 096
- EP-A- 0 432 720
- CH-A- 634 695
- US-A- 4 525 642

## Beschreibung

### TECHNISCHES GEBIET

Die Erfindung bezieht sich auf eine Vorrichtung zur Halterung der Stabenden einer Statorwicklung in einer dynamoelektrischen Maschine, umfassend einen Rotor und einen Stator, welcher Stator einen Statorblechkörper mit endseitigen Statorpressplatten und ein diesen Blechkörper umgebendes Statorgehäuse aufweist und im Blechkörper in Nuten eine Statorwicklung angeordnet ist, deren Enden den Blechkörper axial überragen, welche Halterung einen Innenring aufweist, der sich unmittelbar oder unter Einschaltung einer Zwischenlage an die sich hohlkegelartig erweiternden Stabenden der Statorwicklung anschmiegt, welche Halterung ferner eine Aussenabstützung mit mindestens einem Aussenring und Mittel zur Verspannung des Innenrings mit der Aussenabstützung aufweist, wobei die Mittel zur Verspannung sich an der Stirnseite des Blechkörpers und/oder am Statorgehäuse abstützen.

Die Erfindung nimmt dabei Bezug auf einen Stand der Technik, wie er sich beispielsweise aus der DE-AS 1 197 971 ergibt.

### TECHNOLOGISCHER HINTERGRUND UND STAND DER TECHNIK

Die Befestigung der Stabenden der Statorwicklung (Wickelkopf) von Turbogeneratoren stellt infolge der grossen Beanspruchungen, welchen diese Wickelköpfe ausgesetzt sind, gewisse Probleme. Diese Beanspruchungen haben ihre Ursache in elektromagnetischen Kraftwirkungen sowohl im Dauerbetrieb als auch bei Störungen wie z.B. bei Kurzschlüssen, in Schwingungserscheinungen und in unterschiedlichen Wärmedehnungen der Statorstäbe gegenüber dem Statoreisen während des Betriebes. Diese Belastungen können während des Betriebes oder später zu Lockerungen und Abrieberscheinungen führen, die schlussendlich Erd- und Kurzschlüsse nach sich ziehen.

Zur Verbesserung der Festigkeit der Wickelköpfe von grossen elektrischen Maschinen wurde eine Reihe von Systemen eingeführt, die mehrheitlich mit einem oder mehreren einteiligen Ringen aus Isoliermaterial als zentralem Abstützelement arbeiten.

Bei der Vorrichtung zur Halterung der Stabenden einer Statorwicklung in einer elektrischen Maschine nach der DE-AS 11 97 971 ist ein Innenring vorgesehen, der sich unter Einschaltung einer Zwischenlage an die sich hohlkegelartig erweiternden Stabenden der Statorwicklung anschmiegt, wobei diese Stabenden ihrerseits an Abstützwinkeln abgestützt sind. Die Aussenabstützung erfolgt mit zwei Aussenringen. Zur Verspannung des Innenrings mit den Aussenabstützungen sind Zuglaschen und Keile vorgesehen.

Die bekannte Wickelkopfabstützung hat sich seit Jahren in der Praxis bewährt. Es haftet ihr wie auch anderen bekannten Wickelkopfhalterungen jedoch der Nachteil an, dass ihre mechanischen Eigenfrequenzen zu nahe an die anregenden Frequenzen durch den mechanischen Lauf und/oder elektrodynamische Kräfte (beispielsweise 50 und 100 Hz bei einer 50Hz-Maschine) zu liegen kommen können, sei es infolge fertigungsseitiger Einflüsse oder infolge Alterungs- und Setzerscheinungen im Betrieb.

### KURZE DARSTELLUNG DER ERFINDUNG

Ausgehend vom Stand der Technik liegt der Erfindung die Aufgabe zugrunde, eine Halterung der eingangs genannten Gattung zu schaffen, die auf wirtschaftlich und technisch einfache Weise eine Verstimmung des Wickelkopfverbandes in Richtung niedrigerer Eigenfrequenzen ermöglicht, ohne dass umfangreiche Demontagearbeiten notwendig sind.

Diese Aufgabe wird erfindungsgemäss dadurch gelöst, dass zumindest am äusseren Aussenring gleichmässig über dessen Umfang verteilt Zusatzmassen angeordnet sind, die jeweils zwischen benachbarten Wicklungsstabenden liegen.

Diese Zusatzmassen bestehen vorzusgweise aus einer Vielzahl von Metalldrähten oder Metallstreifen, die durch ein Klebemittel unter sich zusammengehalten sind und mit dem besagten Aussenring lösbar verbunden sind. Sie sind vorzusgweise auf der der Statorpressplatte zugewandten Stirnfläche des Aussenringes mittels Schrauben aus einem nichtmagnetischen Werkstoff befestigt. Das nachträgliche Anbringen der Zusatzmassen erfordert nur vergleichsweise wenig Aufwand. Neben der Herstellung der Zusatzmassen sind an der Maschine lediglich die Befestigungsbohrungen im Aussenring anzubringen, eine Tätigkeit, die vor Ort mit Handwerkzeugen ausgeführt werden kann.

Der Vorteil der Erfindung ist insbesondere darin zu sehen, dass auf diese Weise die Eigenfrequenz des Wickelkopfes mit einfachen Mitteln erniedrigt werden kann. Durch den speziellen Aufbau der Zusatzmassen entstehen keine elektrischen Zusatzverluste im Wickelkopfraum. Auch behindern die Zusatzmassen die Kühlluftströmung im Wickelkopf nur unwesentlich.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung ist ein Ausführungsbeispiel der Erfindung schematisch dargestellt, und zwar zeigt:
- Fig.1: Einen vereinfachten Längsschnitt durch den Wickelkopf eines bekannten Turbogenerators mit einem Innenring und einem inneren und einem äusseren Aussenring;
- Fig.2: einen gegenüber Fig.1 vergrösserten Ausschnitt mit einem Ausführungsbeispiel der Erfindung mit Zusatzmassen, die am äusseren Aussenring befestigt sind;
- Fig.3: das Detail X aus Fig.2, das den Aufbau der Zusatzmassen veranschaulicht;
- Fig.4: einen Querschnitt durch den Wickelkopf gemäss Fig.2 längs deren Linie AA, wobei die Statorwicklungsstäbe weggelassen worden sind.

### WEGE ZUR AUSFÜHRUNG DER ERFINDUNG

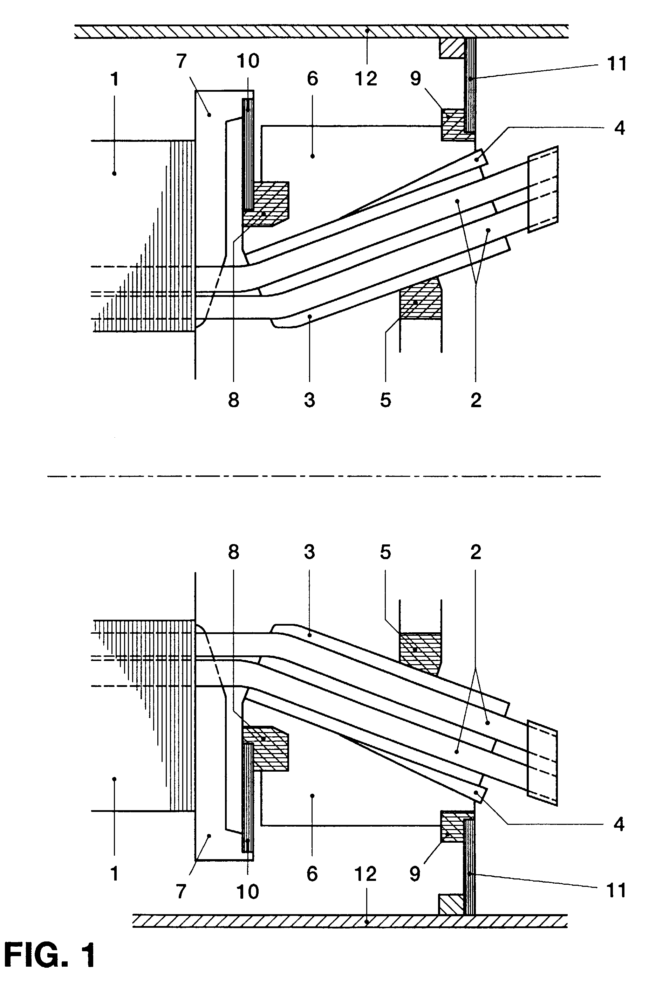

Im vereinfachten Längsschnitt durch die Endpartie eines bekannten Turbogenerators gemäss Fig.1 bedeutet 1 den Statorblechkörper und 2 die Statorwicklungsstäbe. Diese werden mittels Zuglaschen 3, verschiebbaren Keilen 4 und einem Innenring 5 zusammengehalten, und sie stützen sich radial nach aussen hin auf einer Anzahl in Umfangsrichtung gleichmässig verteilter Abstützwinkel 6 ab. Die Aussenabstützung erfolgt durch einen inneren Aussenring 8 und einen äusseren Aussenring 9. Der innere Aussenring 8 ist nicht direkt an der Stirnseite der Statorpressplatte 7, sondern über erste radial verlaufende Blattfederpakte 10 mit der Statorpressplatte 7 verbunden. In analoger Weise ist der äussere Aussenring 9 über zweite radial verlaufende Blattfederpakete 11 mit dem Statorgehäuse 12 verbunden. Beide Blattfederpakete 10, 11 ragen dabei in die Distanzen zwischen benachbarten Abstützwinkeln 6 hinein und sind dort mit den Ringen 8 und 9 verschraubt.

Die beschriebene Abstützung kann auf diese Weise den axialen Bewegungen des Wickelkopfes infolge der Wärmedehnung der Wicklungsstäbe 2 gegenüber dem Statorblechkörper 1 ohne weiteres folgen, wodurch die Lebensdauer der Stabisolation, insbesondere in den Wickelkopfradien, und auch die Kurzschlussfestigkeit des Wickelkopfes gesteigert wird. Die Abstützung ist radial trotzdem "hart".

Insoweit sind Abstützungen für die Statorwickelköpfe von Turbogeneratoren bekannt (DE-AS 11 97 971).

Wie eingangs dargelegt, darf die Veränderung der Eigenfrequenz hin zu niedrigeren Werten bestimmte Grenzen nicht überschreiten, bei 50-Hz-Maschinen also nicht dicht an 50 Hz oder 100 Hz herankommen.

Hier setzt nun die Erfndung ein. Anstelle die die Steifigkeit der Wickelkopfabstützung massgeblichen Elemente zu verstärken oder gar auszutauschen, was mit hohem Aufwand verbunden wäre, sieht die Erfindung vor, am äusseren Aussenring 9 gleichmässig über dessen Umfang verteilt Zusatzmassen 13 anzuordnen, die jeweils zwischen benachbarten Stabenden liegen und mit dem äusseren Aussenring 9 verschraubt sind.

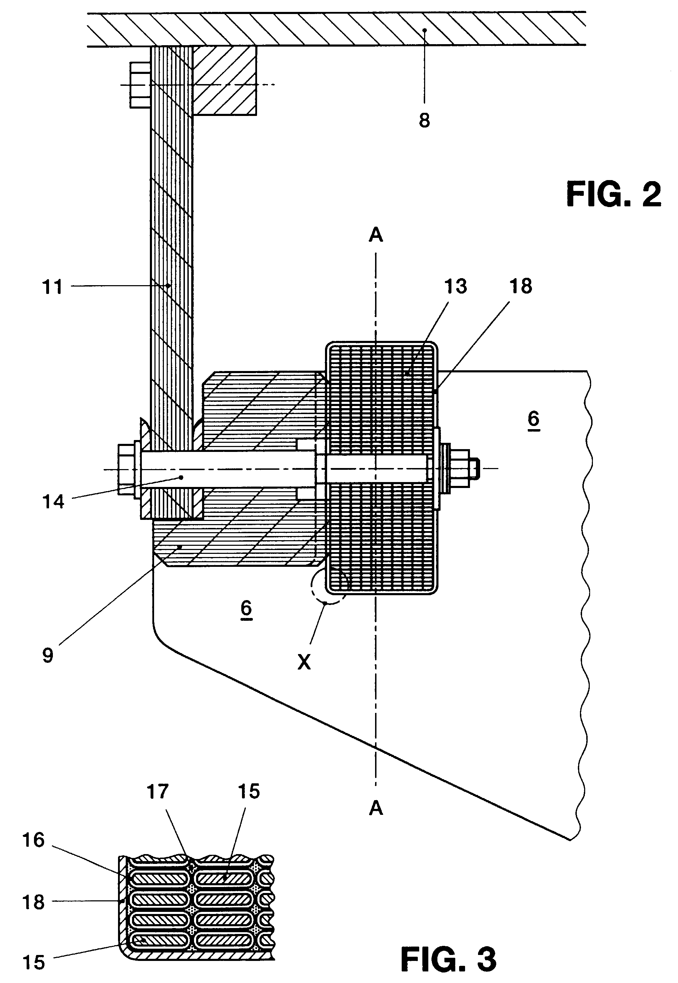

In Fig.2 ist gut zu erkennen, dass die Zusatzmasse 13 von innen her gemeinsam mit dem äusseren Aussenring 9 und teilweise mit dem zweiten Blattfederpaket 11 mittels jeweils zwei Bolzen 14 aus nichtmagnetischem Werkstoff verschraubt ist.

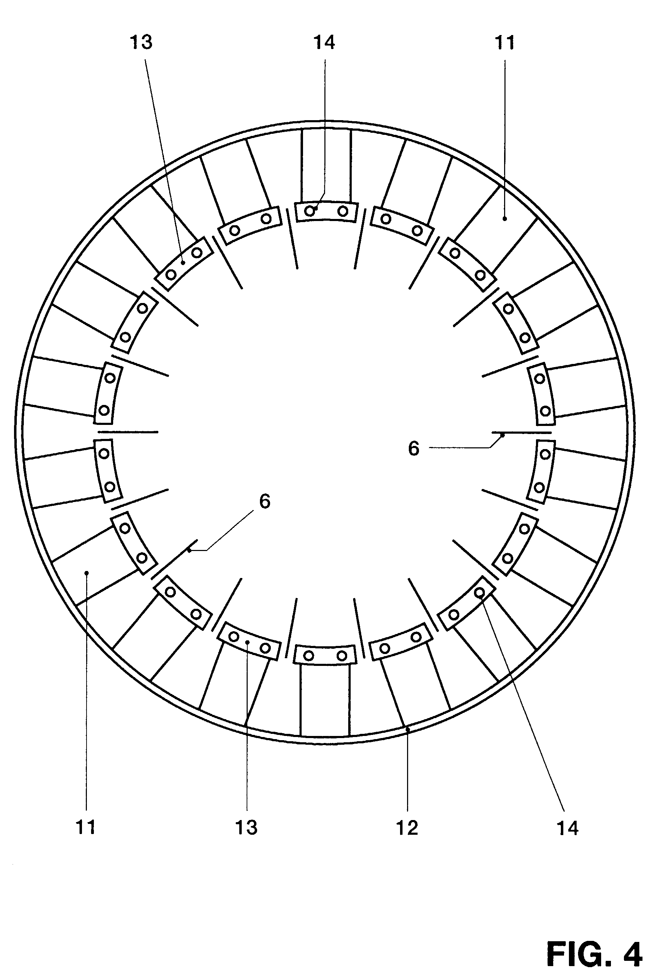

Diese Zusatzmassen 13 - ihre Anordnung und Verteilung geht aus Fig.4 hervor - bestehen vorzusgweise aus einer Vielzahl von Metalldrähten oder Metallstreifen 15 (Fig.3, die das Detail X aus Fig.2 zeigt),vorzugsweise aus Kupferleitern, wie sie für die Statorwicklung verwendet werden. Die einzelnen Leiter 15 sind gegenseitig durch eine Lack- oder andere dünne Isolierschicht 16 isoliert und werden durch ein Klebemittel 17 und eine alle Leiter 15 umgebende Bandage 18 aus Isoliermaterial zusammengehalten. Die Unterteilung der Zusatzmasse 13 in viele "dünne" Teilleiter 15 verhindert die Entstehung höherer Zusatzverluste (Wirbelstromverluste) durch das magnetische Wickelkopffeld.

Die Herstellung der Zusatzmassen 13 erfolgt bevorzugt nach dem folgenden Verfahren.

Isolierte Leiter aus Flachkupfer werden in einer Form zu einem Ring aufgewickelt, der Ring bandagiert, das Ganze mit Tränkharz getränkt und bei erhöhter Temperatur und Anwendung von Druck ausgehärtet, einem Verfahren, wie es bei der Herstellung von aus Teilleitern aufgebauten Leiterstäben für grosse elektrische Maschinen seit langem angewandt wird. Nach dem Aushärten wird der Ring in eine entsprechende Anzahl Segmente aufgeschnitten, die jeweils mit Bohrungen versehen werden.
Alternativ können die Segmente auch einzeln angefertigt werden.

Das nachträgliche Anbringen der Zusatzmassen 13 erfordert nur vergleichsweise wenig Aufwand. Neben der Herstellung der Zusatzmassen sind an der Maschine lediglich die Befestigungsbohrungen im Aussenring 9 anzubringen, eine Tätigkeit, die vor Ort mit Handwerkzeugen ausgeführt werden kann.

### Bezeichnungsliste

- 1: Statorblechkörper
- 2: Wicklungsstäbe
- 3: Zuglaschen
- 4: Keile
- 5: Innenring
- 6: Abstützwinkel
- 7: Statorpressplatte
- 8: innerer Aussenring
- 9: äusserer Aussenring
- 10,11: Blattfederpakete
- 12: Statorgehäuse
- 13: Zusatzmassen
- 14: Bolzen
- 15: Flachleiter aus Kupfer
- 16: Isolierschicht um 15
- 17: Klebemittel
- 18: Bandage

## Patentansprüche

1. Vorrichtung zur Halterung der Stabenden einer Statorwicklung in einer dynamolelektrischen Maschine, umfassend einen Rotor und einen Stator, welcher Stator einen Statorblechkörper (1) mit endseitigen Statorpressplatten (7) und ein diesen Blechkörper umgebendes Statorgehäuse (12) aufweist und im Blechkörper in Nuten eine Statorwicklung angeordnet ist, deren Enden den Blechkörper axial überragen, welche Halterung einen Innenring (5) aufweist, der sich unmittelbar oder unter Einschaltung einer Zwischenlage an die sich hohlkegelartig erweiternden Stabenden (2) der Statorwicklung anschmiegt, welche Halterung ferner eine Aussenabstützung mit mindestens einem Aussenring (10,11) und Mittel (3,4) zur Verspannung des Innenrings (5) mit der Aussenabstützung aufweist, wobei die Mittel zur Verspannung sich an der Stirnseite des Blechkörpers (1) und/oder am Statorgehäuse (12) abstützen, dadurch gekennzeichnet, dass zumindest am äusseren Aussenring (9) gleichmässig über dessen Umfang verteilt Zusatzmassen (13) angeordnet sind, die jeweils zwischen benachbarten Stabenden (2) liegen.

2. Vorrichtung nach Anspruch 1, dadurch gekennzeichnet, dass die Zusatzmassen (13) aus einer Vielzahl von Metalldrähten oder Metallstreifen (15) bestehen, die in Umfangsrichtung verlaufen und durch ein Klebemittel (17) und eine Bandage (18) zusammengehalten sind.

3. Vorrichtung nach Anspruch 2, dadurch gekennzeichnet, dass die Metalldrähte oder Metallstreifen (15) jeweils von einer Isolierschicht (16) umgeben sind.

4. Vorrichtung nach Anspruch 1, 2 oder 3, dadurch gekennzeichnet, dass die Zusatzmassen (13) an der dem Statorblechkörper (1) zugewandten Stirnfläche des besagten Aussenrings (9) befestigt sind.

## Claims

1. Device for holding the bar ends of a stator winding in a dynamoelectric machine, comprising a rotor and a stator, which stator has a stator laminated body (1) having end clamping plates (7) and a stator housing (12) surrounding this laminated body and there is arranged in the laminated body in grooves a stator winding whose ends axially overlap the laminated body, which holder has an inner ring (5) which fits closely, directly or with the interposition of a separator, against the bar ends (2), expanding in the manner of a hollow cone, of the stator winding, which holder further has an outer support having at least one outer ring (10, 11) and means (3, 4) for clamping the inner ring (5) to the outer support, the means for clamping being supported on the end face of the laminated body (1) and/or on the stator housing (12), characterized in that additional masses (13) which are respectively situated between adjacent bar ends (2) are arranged at least on the external outer ring (9), uniformly distributed over the circumference thereof.

2. Device according to Claim 1, characterized in that the additional masses (13) consist of a multiplicity of metal wires or metal strips (15) which extend in the circumferential direction and are held together by means of an adhesive (17) and a bandage (18).

3. Device according to Claim 2, characterized in that the metal wires and metal strips (15) are respectively surrounded by an insulating layer (16).

4. Device according to Claim 1, 2 or 3, characterized in that the additional masses (13) are mounted on the end face of the said outer ring (9) which faces the stator laminated body (1).

## Revendications

1. Dispositif de support pour les têtes de bobines statoriques d'une machine dynamo-électrique, comprenant un rotor et un stator, stator qui présente un corps statorique feuilleté (1) avec des plateaux (7) de serrage du stator aux extrémités et une enveloppe statorique (12) entourant ce corps feuilleté, et une bobine statorique, dont les extrémités dépassent axialement ce corps feuilleté, est disposée dans des encoches dans le corps feuilleté, support qui présente une bague intérieure (5) qui épouse, directement ou avec interposition d'une couche intermédiaire, la forme des têtes de bobines statoriques (2) s'évasant en cône creux, support qui présente en outre un appui extérieur avec au moins une bague extérieure (10, 11) et des moyens (3, 4) pour soutenir la bague intérieure (5) avec l'appui extérieur, les moyens de soutien prenant appui sur la face d'extrémité du corps feuilleté (1) et/ou sur l'enveloppe statorique (12), caractérisé en ce que des masses additionnelles (13), qui se trouvent chaque fois entre des têtes de bobines (2) voisines, sont disposées au moins sur la bague extérieure (9), réparties uniformément à la périphérie de celle-ci.

2. Dispositif suivant la revendication 1, caractérisé en ce que les masses additionnelles (13) se composent d'une pluralité de fils métalliques ou de bandelettes métalliques (15), qui sont orientés en direction périphérique et qui sont tenus ensemble par un agent adhésif (17) et un bandage (18).

3. Dispositif suivant la revendication 2, caractérisé en ce que les fils métalliques ou les bandelettes métalliques (15) sont chacun entourés d'une couche d'isolation (16).

4. Dispositif suivant la revendication 1, 2 ou 3, caractérisé en ce que les masses additionnelles (13) sont fixées à la face d'extrémité de ladite bague extérieure (9) tournée vers le corps statorique feuilleté (1).
